# EUROPÄISCHE PATENTSCHRIFT

(11) **EP 1 733 829 B1**
(45) Veröffentlichungstag und Bekanntmachung des Hinweises auf die Patenterteilung: **28.10.2009**
(21) Anmeldenummer: 05021862.7
(22) Anmeldetag: 07.10.2005
(51) Int. Cl.: B23B 31/12

(54) **Bohrvorrichtung**
Drilling device
Dispositif de perçage

(30) Priorität: 15.06.2005 DE 102005027523
(43) Veröffentlichungstag der Anmeldung: 20.12.2006
(73) Patentinhaber: Röhm GmbH, 89567 Sontheim (DE)
(72) Erfinder: Mack, Hans-Dieter, 89567 Sontheim (DE)
(74) Vertreter: Hentrich, Swen

(56) Entgegenhaltungen:
- EP-A- 0 335 593
- DE-A1- 3 305 733
- DE-A1- 3 700 167
- DE-A1- 19 736 891

## Beschreibung

Die Erfindung betrifft eine Bohrvorrichtung bestehend aus einer eine Bohrspindel aufweisenden Bohrmaschine und einem nachspannenden Bohrfutter, das einen Futterkörper mit einer Spindelaufnahme und einen koaxial zum Futterkörper verdrehbaren Spannkonus aufweist, der axial auf einem am Futterkörper gelagerten Backenhalter abgestützt ist, in dem in Führungsschlitzen Spannbacken geführt sind, die radial verstellbar an einem Mitnehmer geführt und zum Spannen und Lösen durch eine Relativdrehung zwischen dem Futterkörper und dem Spannkonus mit dem Backenhalter verstellbar sind, wozu der Mitnehmer mit einem Mitnehmergewinde in ein koaxial zur Futterachse ausgebildetes Spindelgewinde einer Mitnehmeraufnahme des Futterkörpers eingreift, wobei die Mitnehmeraufnahme gegenüber der Spindelaufnahme einen größeren Durchmesser aufweist, die in die Spindelaufnahme eingesetzte Bohrspindel in die Mitnehmeraufnahme vorsteht und der Mitnehmer in seinem der Bohrspindel zugewandten Ende ein Sackloch aufweist mit einem den Durchmesser der Bohrspindel übersteigenden Innendurchmesser, wobei weiter eine einen zur Futterachse koaxialen Zahnkranz einerseits und eine unter der Kraft einer Feder in den Zahnkranz eingreifenden Sperrklinke andererseits aufweisende Verriegelungseinrichtung vorgesehen ist, die den Futterkörper und die Sperrklinke bei in den Zahnkranz eingerückter Sperrklinke gegen Relativdrehung im Sinne eines Lösens der Spannbacken sperrt, Relativdrehungen im Sinne eines Spannens aber unbehindert lässt.

Zur Verwendung in einer Bohrvorrichtung gestaltete Bohrfutter sind aus der EP 0 017 748 A1 bekannt, die sich in der Praxis sehr gut bewährt haben und daher in entsprechend hohen Stückzahlen hergestellt und verkauft worden sind. Aufgrund des Charakters dieser Bohrfutter als in hohen Stückzahlen gefertigtes Massenprodukt gibt es das stete Bemühen, dessen Konstruktion zu optimieren, um bei Beibehaltung der Einsatztauglichkeit die Herstellungskosten zu reduzieren und die Benutzerfreundlichkeit zu steigern.

Das aus der EP 0 335 593 A2 bekannte Bohrfutter weist die Merkmale des Bohrfutters der eingangs definierten Bohrvorrichtung auf, wobei dieses nachspannende, schlüssellose Bohrfutter eine Verriegelungseinrichtung aufweist, die im Bohrbetrieb eine einmal erreichte Spannkraft sichert. Die Realisierung der komplexen Verriegelungseinrichtung ist relativ aufwändig.

Der Erfindung liegt daher die Aufgabe zugrunde, eine Bohrvorrichtung der eingangs genannten Art so auszubilden, dass diese bei gleichbleibender oder sogar gesteigerter Benutzerfreundlichkeit kostengünstiger hergestellt werden kann.

Diese Aufgabe wird nach der Erfindung bei einer Bohrvorrichtung der eingangs genannten Art dadurch gelöst, dass die Sperrklinke am Bakenhalter gelagert ist, an dem ein Anschlag und an dem Spannkonus ein Gegenanschlag zur definierten Begrenzung einer relativen Verdrehbarkeit des Spannkonus gegenüber dem Backenhalter zwischen einer ersten, dem eingerückten Zustand der Sperrklinke und einer zweiten, dem ausgerückten Zustand der Sperrklinke entsprechenden Drehlage ausgebildet ist, wobei der Anschlag durch zwei in Bohrungen des Backenhalters eingesetzte Stifte gebildet ist.

Die Gewindelänge an dem freistehenden Ende der Bohrspindel beträgt bei einem 1/2-Zoll Gewinde etwa 14 bis 16 mm, wobei aber zur sicheren Übertragung des Drehmoments von der Bohrspindel auf den Futterkörper eine kürzere Gewindelänge, in der Größenordnung von 8 bis 10 mm ausreichend ist und entsprechend die Spindelaufnahme bemessen sein kann, so dass die Bohrspindel in die Mitnehmeraufnahme vorsteht und es zu einer Überlappung des freien Endes der Bohrspindel in der Mitnehmeraufnahme mit den das Sackloch begrenzenden Seitenwänden des Mitnehmers kommt, und das Bohrfutter der erfindungsgemäßen Bohrvorrichtung entsprechend der Überlappung kürzer ausgeführt werden kann. Man spart damit Länge und Gewicht ein und reduziert die Kopflastigkeit. Man spart Kosten sowohl hinsichtlich des Materials als auch bei der Bearbeitung des Materials.

Diese Ausführungsform, bei der eine Verriegelungseinrichtung im Bohrbetrieb den Spannzustand des Bohrfutters sichert, zeichnet sich durch eine Konstruktion aus, die kostengünstig hergestellt werden kann, da eine aufwendige spanabhebende Bearbeitung des Backenhalters zur Realisierung des Anschlags nicht erforderlich ist, in dem lediglich die Bohrungen für die Aufnahme der Stifte einzubringen sind.

Bevorzugt ist es weiterhin, wenn in dem dem Mitnehmer zugewandten Ende der Bohrspindel eine Sicherungsaufnahme ausgebildet ist zur Aufnahme eines Sicherungsgliedes, das in der Mitnehmeraufnahme axial nach hinten abgestützt ist.
Das Sicherungsglied dient dazu, die Verbindung des Futterkörpers mit der Bohrspindel gegen ein Lösen zu sichern, wenn das Bohrfutter in der Richtung angetrieben wird, in der auch der Futterkörper von der Bohrspindel abgeschraubt werden kann.

Dabei besteht dann auch die Möglichkeit, dass eine Distanzhülse mit einem axialen Durchgang für das Sicherungsglied in der Mitnehmeraufnahme abgestützt ist, die dann in das entsprechend vertiefte Sackloch eintaucht.

Es erweist sich auch als günstig, wenn eine Rasteinrichtung mit einem der ersten Drehlage zugeordneten und einem der zweiten Drehlage zugeordneten Rastsitz zwischen dem Backenhalter und dem Spannkonus angeordnet ist, die eine Rastfeder umfasst, die zumindest in der dem Spannen entsprechenden Drehrichtung des Spannkonus dessen Verdrehung gegenüber dem Backenhalter erst bei Erreichen einer vorbestimmten Spannkraft freigibt, und wenn die Rastfeder auf den Stiften angeordnet ist. Die Rasteinrichtung lässt sich damit in sehr einfacher Weise realisieren, so dass insgesamt die Kosten zur Ausstattung des der erfindungsgemäßen Bohrvorrichtung zugeordneten Bohrfutters mit einer Verriegelungseinrichtung mit Rasteinrichtung gering ausfallen.

Wenn der Mitnehmer einen axialen Durchgang von seinem axial vorderen Ende zu dem Sackloch aufweist, bleibt die Zugänglichkeit des Sicherungsgliedes erhalten und die Montage und Demontage des Bohrfutters an der Bohrspindel ist ohne Schwierigkeiten über die gesamte Lebensdauer der Bohrvorrichtung möglich.

Damit kein Bohrstaub oder Bohrklein in den axialen Durchgang eintreten kann, ist das axial vordere Ende des axialen Durchgangs durch eine Deckscheibe abgedeckt ist, die den weiteren Vorteil bietet, daß das Ende eines Werkzeugschaftes sich auf dieser Deckscheibe abstützen kann und nicht zu tief in das Bohrfutter eindringt.

Zur einfachen Verbindung der Deckscheibe mit dem Mitnehmer ist vorgesehen, daß die Deckscheibe ein Außengewinde aufweist zum Zusammenwirken mit einem in dem axialen Durchgang ausgebildeten Innengewinde, wobei die Deckscheibe zur Drehmomentübertragung auf ihrer der Bohrspindel abgewandten Seite eine nicht-kreisrunde Aufnahme aufweist.

Im folgenden wird die Erfindung an in der Zeichnung dargestellten Ausführungsbeispielen näher erläutert; es zeigen:

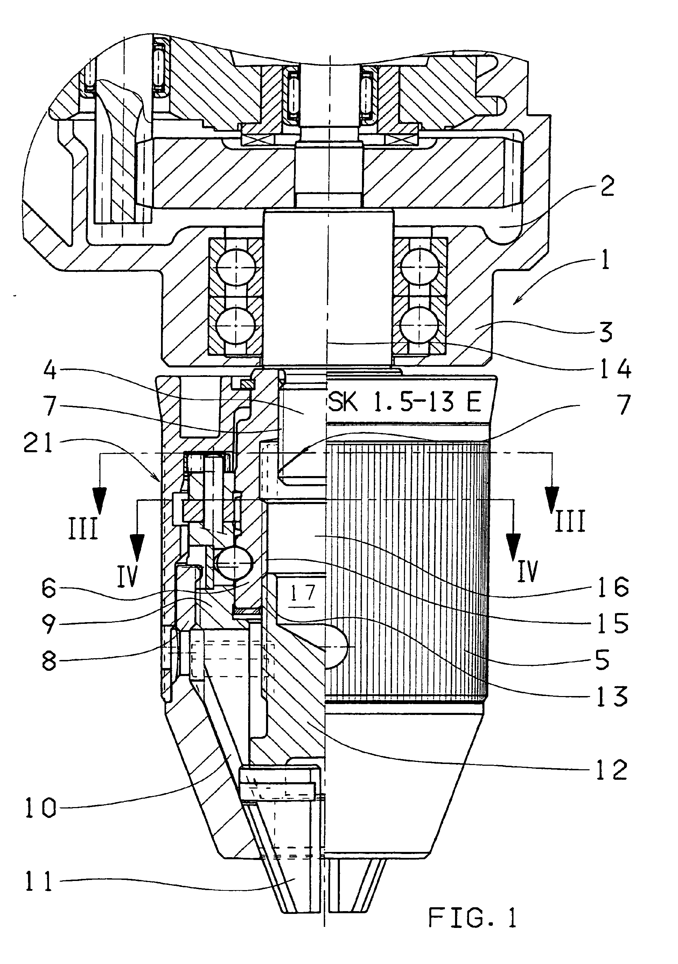

- Fig. 1: das vordere Ende einer erfindungsgemäßen Bohrvorrichtung mit einem Bohrfutter, links in einem Längsschnitt gezeigt, rechts in einer Seitenansicht,
- Fig. 2: eine der Fig. 1 entsprechende Darstellung einer weiteren Ausführungsform,

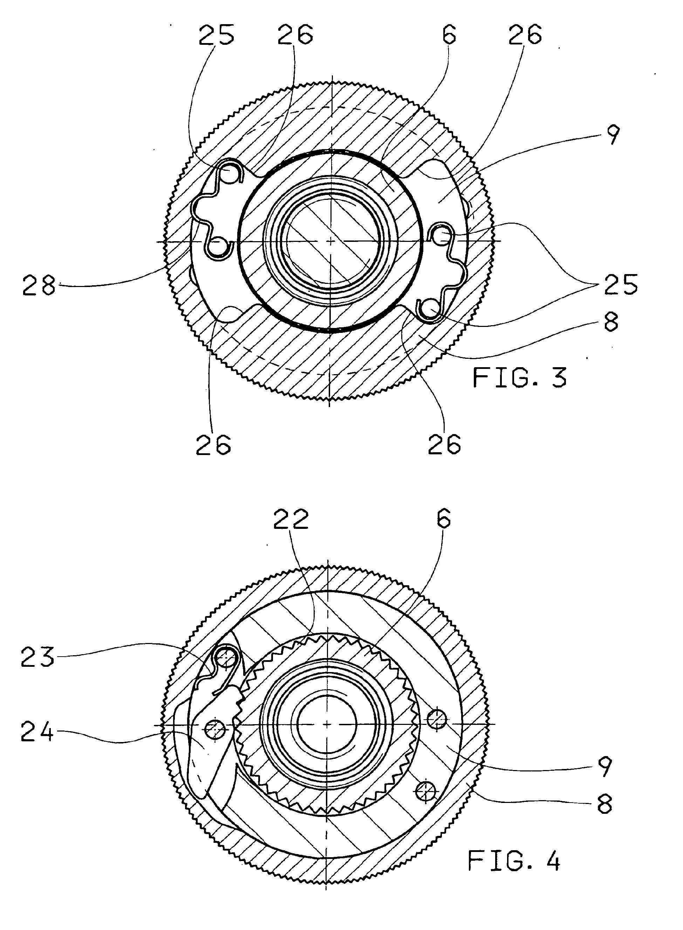

- Fig. 3: den Schnitt III - III aus Fig. 1,
- Fig. 4: den Schnitt IV - IV aus Fig. 1, und
- Fig. 5: eine weitere Ausführungsform in einer der Fig. 1 entsprechenden Darstellung.

In der Zeichnung ist zur Erläuterung der Erfindung der dazu erforderliche vordere Teil einer Bohrvorrichtung 1 gezeigt, nämlich von einer Bohrmaschine 2 das Maschinengehäuse 3 mit der daraus hervorstehenden Bohrspindel 4, auf der ein nachspannendes Bohrfutter 5 angeordnet ist, das einen Futterkörper 6 mit einer Spindelaufnahme 7 zum Aufschrauben auf die Bohrspindel 4 aufweist. Weiterhin umfasst das Bohrfutter 5 einen koaxial zum Futterkörper 6 verdrehbaren Spannkonus 8, der axial auf einem am Futterkörper 6 gelagerten Backenhalter 9 abgestützt ist, in dem in Führungsschlitzen 10 die Spannbacken 11 geführt sind, die weiterhin radial verstellbar in einem Mitnehmer 12 geführt und zum Spannen und Lösen durch eine Relativdrehung zwischen dem Futterkörper 6 und dem Spannkonus 8 mit dem Backenhalter 9 verstellbar sind. Dazu greift der Mitnehmer 12 mit einem Mitnehmergewinde 13 in ein koaxial zur Futterachse 14 ausgebildetes Spindelgewinde 15 einer Mitnehmeraufnahme 16 des Futterkörpers 6 ein. Die Mitnehmeraufnahme 16 weist gegenüber der Spindelaufnahme 7 einen größeren Durchmesser auf. In die Mitnehmeraufnahme 16 steht die in die Spindelaufnahme 7 eingesetzte Bohrspindel 4 vor. Weiterhin weist der Mitnehmer 12 in seinem der Bohrspindel 4 zugewandten Ende ein Sackloch 17 auf mit einem den Durchmesser der Bohrspindel 4 übersteigenden Innendurchmesser, so dass der Mitnehmer 12 in seiner axial rückwärtigen Extremposition beim Öffnen des Bohrfutters bzw. beim Spannen von Werkzeugen mit einem großen Schaftdurchmesser sich mit der Bohrspindel 4 überlappt und entsprechend der Überlappung eine Verkürzung des Bohrfutters 5 vorliegt, insbesondere hinsichtlich des Futterkörpers 6.

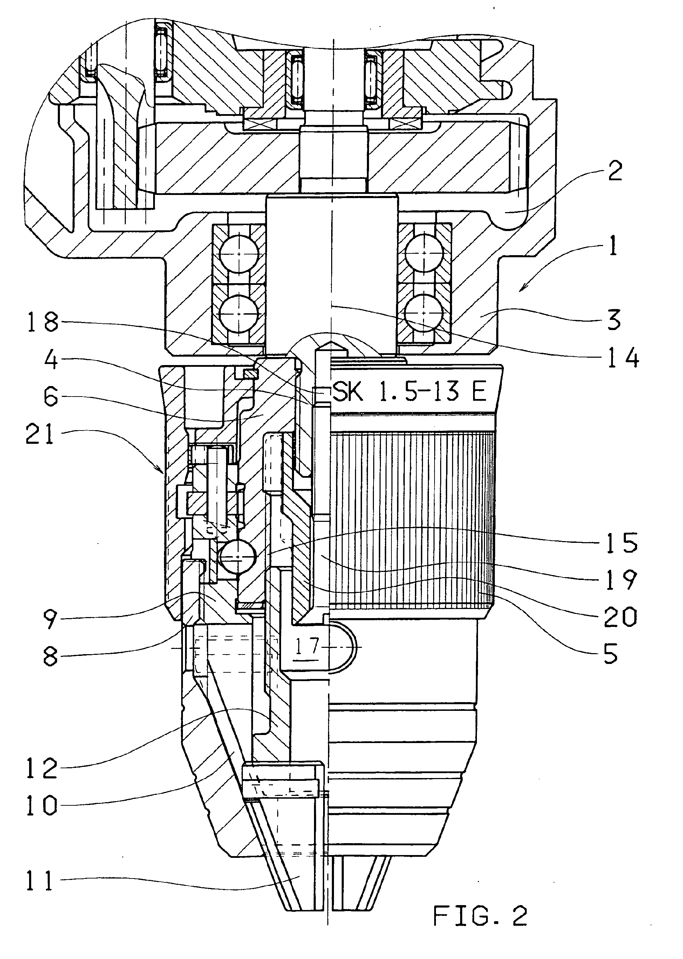

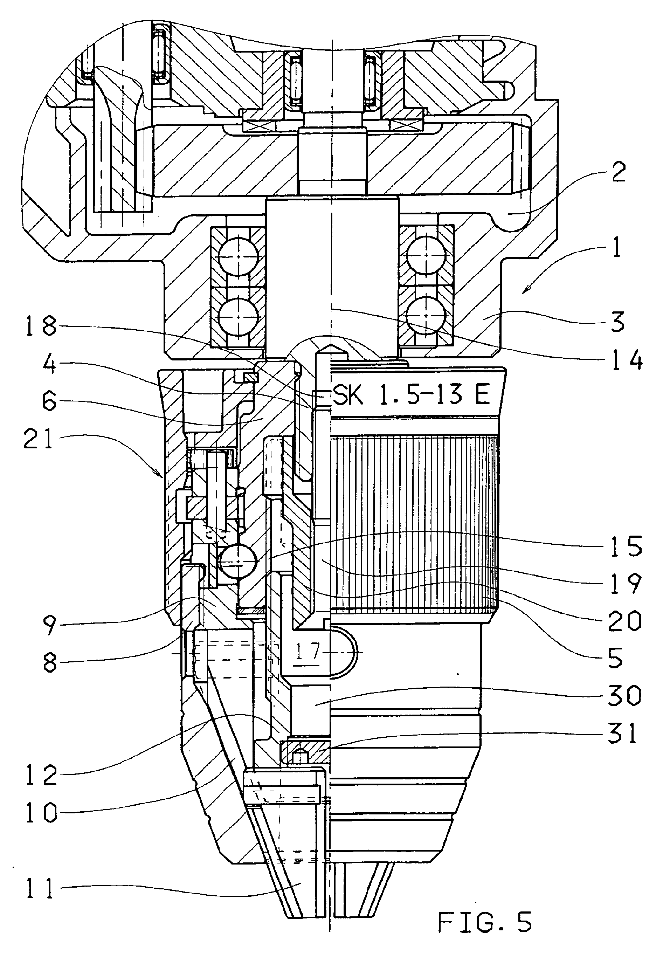

Fig. 2 läßt erkennen, dass in dem dem Mitnehmer 12 zugewandten Ende der Bohrspindel 4 eine Sicherungsaufnahme 18 ausgebildet ist zur Aufnahem eines Sicherungsgliedes 19, nämlich einer Schraube, die in der Mitnehmeraufnahme 16 axial nach hinten abgestützt ist, wobei eine Distanzhülse 20 mit einem axialen Durchgang für das Sicherungsglied 19 Verwendung findet. Damit das Sicherungsglied gut zugänglich ist, weist der Mitnehmer 12 einen axialen Durchgang 30 von seinem axial vorderen Ende zu dem Sackloch 17 auf, wobei das axial vordere Ende des axialen Durchgangs 30 durch eine Deckscheibe 31 abgedeckt ist, die ein Außengewinde aufweist zum Zusammenwirken mit einem in dem axialen Durchgang 30 ausgebildeten Innengewinde (Fig. 5). Damit die Deckscheibe 31 eingeschraubt werden kann, besitzt sie auf ihrer der Bohrspindel 4 abgewandten Seite eine nicht-kreisrunde Aufnahme, durch die ein Drehmoment übertragen werden kann und die das Eintreten und Verklemmen eines Werkzeugschaftes aufgrund ihrer Form verhindert.

Das Bohrfutter 5 weist weiterhin eine verriegelungseinrichtung 21 mit einer Rasteinrichtung auf, wobei die Verriegelungseinrichtung einen zur Futterachse 14 koaxialen Zahnkranz 22 einerseits und eine unter der Kraft einer Feder 23 in den Zahnkranz 22 eingreifende, am Backenhalter 9 gelagerte Sperrklinke 24 andererseits umfasst, so dass der Futterkörper 6 und die Sperrklinke 24 bei in den Zahnkranz 22 eingerückter Sperrklinke 24 gegen Relativdrehungen im Sinne eines Lösens der Spannbacken 11 gesperrt sind, Relativdrehung im Sinne eines Spannens aber unbehindert bleiben. An dem Backenhalter 9 ist ein Anschlag 25 und an dem Spannkonus 8 ein Gegenanschlag 26 zur definierten Begrenzung einer relativen Verdrehbarkeit des Spannkonus 8 gegenüber dem Backenhalter 9 zwischen einer ersten, dem eingerückten Zustand der Sperrklinke 24 und einer zweiten, dem ausgerückten Zustand der Sperrklinke 24 entsprechenden Drehlage ausbildet. Die Rasteinrichtung weist dazu einen der ersten Drehlage und einen der zweiten Drehlage zugeordneten Rastsitz zwischen dem Backenhalter 9 und dem Spannkonus 8 auf, wobei die Rasteinrichtung eine Rastfeder 28 umfaßt, die zumindest in der dem Spannen entspechenden Drehrichtung des Spannkonus 8 dessen Verdrehung gegenüber dem Backenhalter 9 erst bei Erreichen einer vorbestimtmen Spannkraft freigibt. Der Anschlag 25 ist durch zwei in Bohrungen des Backenhalters 9 eingesetzte Stifte gebildet, auf denen die Rastfeder 28 platziert ist.

## Patentansprüche

1. Bohrvorrichtung bestehend aus einer eine Bohrspindel (4) aufweisenden Bohrmaschine (2) und einem nachspannenden Bohrfutter (5), das einen Futterkörper (6) mit einer Spindelaufnahme (7) und einem koaxial zum Futterkörper (6) verdrehbaren Spannkonus (8) aufweist, der axial auf einem am Futterkörper (6) gelagerten Backenhalter (9) abgestützt ist, in dem in Führungsschlitzen (10) Spannbacken (11) geführt sind, die radial verstellbar an einem Mitnehmer (12) geführt und zum Spannen und Lösen durch eine Relativdrehung zwischen dem Futterkörper (6) und dem Spannkonus (8) mit dem Backenhalter (9) verstellbar sind, wozu der Mitnehmer (12) mit einem Mitnehmergewinde (13) in ein koaxial zur Futterachse (14) ausgebildetes Spindelgewinde (15) einer Mitnehmeraufnahme (16) des Futterkörpers (6) eingreift, wobei die Mitnehmeraufnahme (16) gegenüber der Spindelaufnahme (7) einen größeren Durchmesser aufweist, die in die Spindelaufnahme (7) eingesetzte Bohrspindel (4) in die Mitnehmeraufnahme (16) vorstehet und der Mitnehmer (12) in seinem der Bohrspindel (4) zugewandten Ende ein Sackloch (17) aufweist mit einem den Durchmesser der Bohrspindel (4) übersteigenden Innendurchmesser, wobei weiter eine einen zur Futterachse (14) koaxialen Zahnkranz (22) einerseits und eine unter der Kraft einer Feder (23) in den Zahnkranz (22) eingreifenden Sperrklinke (24) andererseits aufweisende Verriegelungseinrichtung (21) vorgesehen ist, die den Futterkörper (6) und die Sperrklinke (24) bei in den Zahnkranz (22) eingerückter Sperrklinke (24) gegen Relativdrehungen im Sinne eines Lösens der Spannbacken (11) sperrt, Relativdrehungen im Sinne eines Spannens aber unbehindert lässt, **dadurch gekennzeichnet, dass** die Sperrklinke (24) am Backenhalter (9) gelagert ist, an dem ein Anschlag (25) und an dem Spannkonus (8) ein Gegenanschlag (26) zur definierten Begrenzung einer relativen Verdrehbarkeit des Spannkonus (8) gegenüber dem Backenhalter (9) zwischen einer ersten, dem eingerückten Zustand der Sperrklinke (24) und einer zweiten, dem ausgerückten Zustand der Sperrklinke (24) entsprechenden Drehlage ausgebildet ist, wobei der Anschlag (25) durch zwei in Bohrungen des Backenhalters (9) eingesetzte Stifte gebildet ist.

2. Bohrvorrichtung nach Anspruch 1, **dadurch gekennzeichnet, dass** in dem dem Mitnehmer (12) zugewandten Ende der Bohrspindel (4) eine Sicherungsaufnahme (18) ausgebildet ist zur Aufnahme eines
Sicherungsgliedes (19), das in der Mitnehmeraufnahme (16) axial nach hinten abgestützt ist.

3. Bohrvorrichtung nach Anspruch 2, **dadurch gekennzeichnet, dass** eine Distanzhülse (20) mit einem axialen Durchgang für das Sicherungsglied (19) in der Mitnehmeraufnahme (16) abgestützt ist.

4. Bohrvorrichtung nach einer der Ansprüche 1 bis 3, **dadurch gekennzeichnet, dass** eine Rasteinrichtung mit einem der ersten Drehlage zugeordneten und einem der zweiten Drehlage zugeordneten Rastsitz zwischen dem Backenhalter (9) und dem Spannkonus (8) angeordnet ist, die eine Rastfeder (28) umfasst, die zumindest in der dem Spannen entsprechenden Drehrichtung des Spannkonus dessen Verdrehung gegenüber dem Backenhalter (9) erst bei Erreichen einer vorbestimmten Spannkraft freigibt, und dass die Rastfeder (28) auf den Stiften angeordnet ist.

5. Bohrvorrichtung nach einem der Ansprüche 1 bis 4, **dadurch gekennzeichnet, dass** der Mitnehmer (12) einen axialen Durchgang (30) von seinem axial vorderen Ende zu dem Sackloch (17) aufweist.

6. Bohrvorrichtung nach Anspruch 5, **dadurch gekennzeichnet, dass** das axial vordere Ende des axialen Durchgangs (30) durch eine Deckscheibe (31) abgedeckt ist.

7. Bohrvorrichtung nach Anspruch 6, **dadurch gekennzeichnet, dass** die Deckscheibe (31) ein Außengewinde aufweist zum Zusammenwirken mit einem in dem axialen Durchgang (30) ausgebildeten Innengewinde.

8. Bohrvorrichtung nach Anspruch7, **dadurch gekennzeichnet, dass** die Deckscheibe (31) auf ihrer der Bohrspindel (4) abgewandten Seite eine nicht-kreisrunde Aufnahme aufweist.

## Claims

1. A drilling apparatus comprising a drilling machine (2) having a drilling spindle (4) and a re-tightening drill chuck (5) which has a chuck body (6) with a spindle receiving means (7) and a clamping cone (8) which is rotatable coaxially relative to the chuck body (6) and which is supported axially on a jaw holder (9) which is mounted to the chuck body (6) and in which there are guided in guide slots (10) clamping jaws (11) which are guided radially displaceably on an entrainment member (12) and are displaceable for tightening and loosening by a relative rotary movement between the chuck body (6) and the clamping cone (8) with the jaw holder (9), for which purpose the entrainment member (12) engages with an entrainment member screwthread (13) into a spindle screwthread (15), provided coaxially with the chuck axis (14), of an entrainment member receiving means (16) of the chuck body (6), wherein the entrainment member receiving means (16) is of a larger diameter in relation to the spindle receiving means (7), the drilling spindle (4) fitted into the spindle receiving means (7) projects into the entrainment member receiving means (16) and the entrainment member (12) in its end towards the drilling spindle (4) has a blind hole (17) of an inside diameter exceeding the diameter of the drilling spindle (4), wherein moreover there is provided a locking device (21) which on the one hand has a toothed ring (22) coaxial with the chuck axis (14) and on the other hand a locking pawl (24) engaging into the toothed ring (22) under the force of a spring (23) and which locks the chuck body (6) and the locking pawl (24) against relative rotary movements in the direction of release of the clamping jaws (11) when the locking pawl (24) is engaged into the toothed ring (22) but unimpededly allows relative rotary movements in the direction of tightening, **characterised in that** the locking pawl (24) is mounted to the jaw holder (9) on which an abutment (25) is provided and a counterpart abutment (26) is provided on the clamping cone (8) for definedly limiting a relative rotatability of the clamping cone (8) with respect to the jaw holder (9) between a first rotary position corresponding to the engaged condition of the locking pawl (24) and a second rotary position corresponding to the disengaged condition of the locking pawl (24), the abutment (25) being formed by two pins fitted into bores in the jaw holder (9).

2. A drilling apparatus according to claim 1 **characterised in that** provided in the end of the drilling spindle (4), that is towards the entrainment member (12), is a securing receiving means (18) for receiving a securing member (19) which is supported axially rearwardly in the entrainment member receiving means (16).

3. A drilling apparatus according to claim 2 **characterised in that** a spacer sleeve (20) with an axial through passage for the securing member (19) is supported in the entrainment member receiving means (16).

4. A drilling apparatus according to one of claims 1 to 3 **characterised in that** a latching device with a latching seat associated with the first rotary position and a latching seat associated with the second rotary position is arranged between the jaw holder (9) and the clamping cone (8), which includes a latching spring (28) which at least in the direction of rotation of the clamping cone corresponding to the clamping effect enables rotary movement thereof with respect to the jaw holder (9) only upon the attainment of a given clamping force, and that the latching spring (28) is arranged on the pins.

5. A drilling apparatus according to one of claims 1 to 4 **characterised in that** the entrainment member (12) has an axial through passage (30) from its axially forward end to the blind hole (17).

6. A drilling apparatus according to claim 5 **characterised in that** the axially forward end of the axial through passage (30) is covered by a cover disc (31).

7. A drilling apparatus according to claim 6 **characterised in that** the cover disc (31) has a male screwthread for co-operation with a female screwthread provided in the axial through passage (30).

8. A drilling apparatus according to claim 7 **characterised in that** the cover disc (31) has a non-circular receiving means on its side remote from the drilling spindle (4).

## Revendications

1. Dispositif de perçage, constitué d'une perceuse (2), présentant une broche de perçage (4), et d'un mandrin porte-foret (5) autoserrant qui comporte un corps de mandrin (6) avec un logement de broche (7) et un cône de serrage (8) qui peut être mis en rotation coaxialement avec le corps de mandrin (6) et prend appui axialement sur un support de mors (9) qui est monté sur le corps de mandrin (6) et dans lequel des mors de serrage (11) sont guidés dans des fentes de guidage (10), mors qui sont guidés sur un élément entraîneur (12), avec possibilité de déplacement radial, et, en vue du serrage et du desserrage, peuvent être déplacés par le support de mors (9), par une rotation relative entre le corps de mandrin (6) et le cône de serrage (8), du fait que l'élément entraîneur (12) s'engage avec un filetage d'entraîneur (13) dans un taraudage de broche (15) d'un logement d'entraîneur (16) du corps de mandrin (6), réalisé coaxialement avec l'axe de mandrin (14), le logement d'entraîneur (16) ayant un diamètre supérieur à celui du logement de broche (7), la broche de perçage (4), qui est insérée dans le logement de broche (7), avançant dans le logement d'entraîneur (16), et l'élément entraîneur (12) présentant, dans son extrémité tournée vers la broche de perçage (4), un trou borgne (17) dont le diamètre intérieur est supérieur au diamètre de la broche de perçage (4), ledit dispositif comprenant en outre un moyen de verrouillage (21) qui présente, d'une part, une couronne dentée (22) coaxiale avec l'axe de mandrin (14) et, d'autre part, un cliquet d'arrêt (24) s'engageant dans la couronne dentée (22) sous l'action d'un ressort (23), et qui bloque le corps de mandrin (6) et le cliquet d'arrêt (24) lorsque le cliquet (24) est engagé dans la couronne dentée (22), afin d'empêcher des rotations relatives dans le sens du desserrage des mors de serrage (11), tout en autorisant des rotations relatives dans le sens du serrage, **caractérisé par le fait que** le cliquet d'arrêt (24) est monté sur le support de mors (9) sur lequel est réalisée une butée (25), et une contre-butée (26) est réalisée sur le cône de serrage (8) en vue d'une limitation définie d'une possibilité de rotation relative du cône de serrage (8) par rapport au support de mors (9), entre une première position angulaire, correspondant à l'état engagé du cliquet d'arrêt (24), et une deuxième position angulaire, correspondant à l'état dégagé du cliquet (24), la butée (25) étant formée de deux tiges insérées dans des alésages du support de mors (9).

2. Dispositif de perçage selon la revendication 1, **caractérisé par le fait que** dans l'extrémité de la broche de perçage (4) tournée vers l'élément entraîneur (12), il est prévu un logement de fixation (18) qui est destiné à recevoir un élément de fixation (19) prenant appui axialement vers l'arrière dans le logement d'entraîneur (16).

3. Dispositif de perçage selon la revendication 2, **caractérisé par le fait qu'**un manchon d'espacement (20), doté d'un passage axial pour l'élément de fixation (19), est en appui dans le logement d'entraîneur (19).

4. Dispositif de perçage selon une des revendications 1 à 3, **caractérisé par le fait qu'**un moyen d'encliquetage, avec un point d'encliquetage associé à la première position angulaire et un point d'encliquetage associé à la deuxième position angulaire, est installé entre le support de mors (9) et le cône de serrage (8) et comprend un ressort d'encliquetage (28) qui autorise la rotation du cône de serrage par rapport au support de mors (9) lorsqu'une force de serrage prédéterminée est atteinte, au moins dans le sens de rotation correspondant au serrage, et **par le fait que** le ressort d'encliquetage (28) est disposé sur les tiges.

5. Dispositif de perçage selon une des revendications 1 à 4, **caractérisé par le fait que** l'élément entraîneur (12) présente un passage (30) axial qui s'étend depuis son extrémité axiale avant jusqu'au trou borgne (17).

6. Dispositif de perçage selon la revendication 5, **caractérisé par le fait que** l'extrémité axiale avant du passage (30) axial est couverte par une plaque de recouvrement (31).

7. Dispositif de perçage selon la revendication 6, **caractérisé par le fait que** la plaque de recouvrement (31) présente un filetage extérieur qui est destiné à coopérer avec un taraudage façonné dans le passage (30) axial.

8. Dispositif de perçage selon la revendication 7, **caractérisé par le fait que** la plaque de recouvrement (31) présente un logement non circulaire sur sa face éloignée de la broche de perçage (4).
